# EUROPEAN PATENT SPECIFICATION

(11) **EP 1 363 728 B1**
(45) Date of publication and mention of the grant of the patent: **08.08.2007**
(21) Application number: 02748326.2
(22) Date of filing: 25.02.2002
(51) Int. Cl.: B01J 8/00, B01J 8/02, B01J 8/04, B01D 3/00, B01D 3/32

(54) **REACTOR**
REAKTOR
REACTEUR

(30) Priority: 01.03.2001 EP 01301882
(43) Date of publication of application: 26.11.2003
(73) Proprietor: SHELL INTERNATIONALE RESEARCH MAATSCHAPPIJ B.V., 2596 HR Den Haag (NL)
(72) Inventor: VAN HASSELT, Bastiaan, Willem, NL-1031 CM Amsterdam (NL); KIKKERT, Bastiaan, Leonard, Johan, Pieter, NL-1031 CM Amsterdam (NL); OUWERKERK, Charles, Eduard, Dammis, NL-1031 CM Amsterdam (NL); VAN SCHIE, Henricus, Gijsbertus, NL-1031 CM Amsterdam (NL); DE SNAIJER, Arie, NL-1031 CM Amsterdam (NL)
(86) International application number: PCT/EP2002/002305
(87) International publication number: WO 2002/070120

(56) References cited:
- US-A- 3 657 864
- US-A- 3 880 961
- US-A- 3 996 316
- US-A- 4 282 832
- US-A- 4 481 105

## Description

The present invention relates to a reactor comprising a reactor internal and to the use of such a reactor for hydrocarbon processing.

The reactor is suitably used as a trickle flow reactor. This is a gas-liquid reactor in which liquid trickles through one reaction bed or through a number of reaction beds arranged one below the other and in which gas flows co-currently or counter-currently with the liquid through the reaction bed(s). Such reactors are used in the chemical industry and in the petroleum refining industry for hydrocarbon processing, especially hydroprocessing such as catalytic dewaxing, hydrotreating and hydrocracking.

Such a reactor has at least one inlet for gas and/or liquid, at least one outlet for reactor effluent and at least one reaction bed, typically a bed of catalyst particles resting upon a support grid. The construction of suitable support grids is known in the art. For instance, commonly applied support grids comprise one or more permeable plates such as sieve plates or grids. These support grids typically rest on support rings on the wall of the reactor vessel and/or on support beams.

Liquid and gaseous effluents, formed in the reactions occurring in the catalyst beds are passed through the support grids to the subsequent catalyst bed or reactor outlet. In order to prevent small catalyst particles from leaking through the support grid on which they rest, a layer of ceramic particles may be placed between the grid and the catalyst particles.

Such reactors typically contain distribution devices, for example to distribute the liquid and gas entering the reactor via the reactor inlet homogeneously over the upper reaction bed or to distribute the effluent of a reaction bed homogeneously over the next lower reaction bed or for mixing or cooling the reactor effluents before they enter the next lower reaction bed. Such distribution devices are known in the art, for example from EP 716 881, WO 97/46303, and WO 99/28024.

Ideally, reactor internals such as support grids and distribution devices rest on support rings present on the side wall of the reactor vessel and/or on horizontally extending support beams that rest on such rings. However, in for example revamp situations, i.e. when a reactor vessel is going to be used for a different purpose or for different process conditions than for which it was originally designed, support rings may not be present at the location where a reactor internal would ideally be placed.

If support rings are not present, reactor internals or support rings might be welded to the reactor side wall. In US 4 282 832, for example, is disclosed a reactor that contains separate vertically spaced apart beds of packing material. The beds are supported by a fuel distributor assembly containing among others a support plate and a distributor plate, whereby the distributor plate is hung from the support plate by support tubes. The assembly is permanently located in the reactor conduit by welding the support plate around its entire perimeter to the inner surface of the reactor conduit.

Alternatively, the internals might rest on a support frame resting on the bottom of the vessel.

Disadvantages, however, of such a support frame are that its presence impedes the fluid flow through the reactor and that construction costs are high due to the requirement that the internal should be horizontally positioned in the vessel. Welding in existing vessels, especially in the case of low-alloy steel vessels, requires careful preparation and may require annealing of the vessel after welding or even welding under pre-heated conditions.

An object of the present invention is to provide for reactor internals that can be positioned at a desired vertical level in a reactor vessel, without the need for support rings, weldings or a support frame resting on the bottom of the reactor vessel.

It has now been found that the above object can be achieved by a reactor internal comprising a lower support grid suitable to rest on the upper surface of a reaction bed and further comprising at least one distribution device connected to and spaced apart from the lower support grid by means of vertically extending legs.

Accordingly, the present invention relates to a reactor comprising a normally vertically extending vessel, the vessel containing at least one reaction bed and a reactor internal comprising a substantially horizontal lower support grid and at least one distribution device selected from a distribution tray and means for distributing a quench fluid, which distribution device is located above the lower support grid and is connected to and spaced apart from the lower support grid by means of vertically extending legs, in which reactor the lower support grid rests upon the upper surface of a reaction bed.

Distribution trays are known in the art and serve to distribute effluent of an upper reaction bed evenly over a lower reaction bed or to distribute reactants introduced in the top of a reactor evenly over the upper reaction bed. Typically, distribution trays are provided with a plurality of openings or downcomers for downward flow of liquid and, optionally, gas.

The above-defined reactor internal can be placed on the upper surface of the upper reaction bed in a reactor or it can be placed on the upper surface of a lower reaction bed in a multiple bed reactor as an interbed internal.

The reactor may comprise a reactor internal comprising a substantially horizontal lower support grid, a substantially horizontal upper support grid, and at least one distribution device selected from a distribution tray and means for distributing a quench fluid, which distribution device is located between the upper and lower support grid, wherein the support grids are connected to and spaced apart from each other by means of vertically extending legs.

An advantage of this embodiment is that it can be used in a reactor between adjacent beds by placing it on the upper surface of the reaction bed below the internal whilst the reaction bed above the internal rests on the upper support grid. Thus, the support grid for the reaction bed above the internal is supported without the need of support rings or weldings, and a space between the adjacent beds in created wherein a distribution device can be placed.

If the reactor internal contains both means for distributing a quench fluid and a distribution tray, the quench is preferably located above the distribution tray. The reactor internal may comprise further distribution devices, such as a pre-distribution tray and/or a device for mixing the effluent fluids from the above-lying reaction bed. Such devices are known in the art, for example from EP 716 881, WO 97/46303, and WO 99/28024.

The position of the distribution device(s) within the reactor internal according to the invention with respect to each other and with respect to the support grid(s) is fixed. This can suitably be achieved by connecting them to the lower or upper support grid or to each other by means of vertically extending legs. These vertically extending legs may be the same legs as the ones that connect the upper and lower support grid to each other.

The purpose of the vertically extending legs is to connect the support grids and, if no upper support grid is present, the lower support grid and the upper distribution device, to each other and to space them apart. Further, they provide stiffness to the internal in axial direction. It will be appreciated that the number of vertically extending legs depends among others on the mass of the internal, the weight supported by the internal and the operating conditions, especially gas flow, when in use in a reactor.

Preferably, the support grid(s) of the reactor internal and, if a distribution tray is present, also the distribution tray, are composed of different smaller panels that are connected to each other. Suitably, the panels are connected to each other by joints that provide for a rigid connection, for example a wedge-shaped split-key connection. Any type of rigid joint suitable to be used under the operating conditions of the reactor, may be used. Such joints are known in the art. The vertically extending legs for connecting the support grids and the distribution device(s) to each other may be used to connect the different smaller panels of a grid or tray to each other.

Although rigidly connected, the individual panels will have some freedom of movement due to the unavoidable flexibility of any joint. Thus, each panel will have the possibility to take on a position that can deviate a little from the horizontal plane. An advantage of such a construction is that the weight of the reactor internal can be evenly spread over the bed upon which it rests, also in the case that the upper surface of the bed upon which it rests is not perfectly horizontal. Moreover, if composed of smaller panels, the internal can be dismounted and thus easily removed from the reactor via a manhole, for example when removal of the catalyst from the reactor is needed.

Suitable support grids do not impede uniform distribution of gas and liquid over the reaction beds. These grids preferably have an open area of at least 50% of its total area. Such grids are known in the art and may be manufactured of V-wire screen or woven metal mesh screen.

It is preferred that, during normal operation of the reactor, no catalyst particles can by-pass the support grid(s) and no fluids can by-pass the distribution tray. Therefore, preferably the support grid(s) of the reactor internal and, if a distribution tray is present, also the distribution tray, are each provided with sealing means around its perimeter.

Suitable sealing means are composed of a resilient, high-temperature resistant material such as glass fibre or ceramic rope or fibre. Such sealing means are known in the art.

Also, during normal operation of a reactor wherein the reactor internal is placed, it is important that each of the sealing means stays positioned around the perimeter of the grid or tray, also in the case that the internal moves in vertical direction with respect to the side wall of the vessel. Vertical displacement can occur as a result of changes in the height of the catalyst bed upon which the lower support grid rests, for example due to compacting of the catalyst bed during operation of the reactor. Therefore, each of the sealing means is preferably contained in a stuffing box which is open-ended toward the side wall of the reactor vessel. Such a box may for example be formed by the outer side surface of the grid or tray, a retainer ring and a compression ring.

Preferably, the reaction bed on which the lower support grid rests comprises a densely-packed bed of catalyst particles. The advantage of a densely-packed bed of catalyst particles is that the height of the bed will remain relatively constant during operation of the reactor, since compacting of the catalyst bed will be limited. Catalyst loading methods for forming densely-packed beds are well-known in the art.

In order to avoid leakage of catalyst particles from the catalyst on which the lower support grid rests through the lower support grid, the bed on which the lower support grid rests preferably comprises a layer of ceramic support particles on top of a layer of catalyst particles. This layer of ceramic particles also serves to spread the mechanical load of the reactor internal over the catalyst particles below, such that breakage and attrition of the catalyst particles is prevented. The size of the ceramic particles is' such that they cannot pass through the lower support grid. It will be appreciated that such a layer of ceramic particles should be such that it does not impede the uniform distribution of gas and liquid over the catalyst bed below.

If the reactor internal comprises means for distributing a quench fluid, these means are preferably flexibly connected to a quench fluid supply conduit, in order to allow axial movement of the internal with respect to the reactor vessel.

In a final aspect, the invention relates to the use of a reactor as hereinbefore-defined in a process for hydrocarbon processing, preferably in catalytic dewaxing, hydrotreating, hydrocracking, or hydrodesulphurisation.

The invention will be further illustrated by way of example by means of schematic Figures 1 to 4. The Figures are not drawn to scale. Similar parts in different figures are referred to with the same reference numerals.

Figure 1 shows a longitudinal section through the upper part of a reactor containing a first embodiment of the invention.

Figure 2 shows in more detail a longitudinal section of the sealing means of the reactor internal shown in Figure 1.

Figure 3 shows a longitudinal section through part of a reactor containing a second embodiment of the invention.

Figure 4 is a top view of a lower support grid of the reactor internal according to the invention.

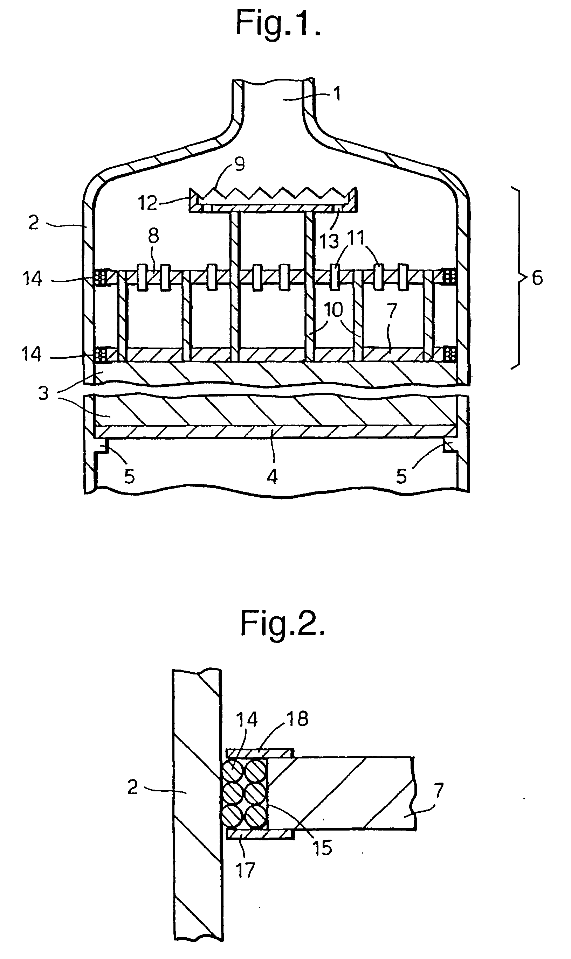

In Figure 1 is shown the upper part of a reactor having an inlet 1 for gaseous and liquid reactants, a side wall 2, and a catalyst bed 3. The catalyst bed 3 rests on support grid 4, which rests on ring 5 in the side wall 2. The reactor contains a reactor internal 6 which rests on the upper surface of catalyst bed 3. The internal 6 comprises a lower support grid 7, a distribution tray 8 and a pre-distribution tray 9, which are connected to each other by means of vertically extending legs 10. The distribution tray 8 is provided with downcomers 11. The pre-distribution tray 9 has an overflow weir 12 at its perimeter and is provided with a plurality of openings 13 near its perimeter.

Sealing means 14 in the form of ceramic rope is attached around the perimeter of each of the lower support grid 7 and the distribution tray 8.

During normal operation of the reactor shown in Figure 1, gaseous and liquid reactants enter the reactor via inlet 1 and the liquid is evenly distributed over distribution tray 8 by pre-distribution tray 9. At the distribution tray 8, the gaseous and liquid reactants are brought together. The distribution tray 8 serves two purposes. Firstly, it evenly distributes liquid and gas before the fluids enter a lower reaction bed and, secondly, it allows contact between liquid and gas to provide liquid-gas interaction.

The sealing means 14 provide for a fluid-tight sealing between distribution tray 8 and side wall 2, such that fluids cannot by-pass distribution tray 8 otherwise than through downcomers 11.

The sealing means 14 around the lower support grid 7 prevent catalyst particles from passing between the grid 7 and the side wall 2.

If, during operation of the reactor, the height of the catalyst bed 3 upon which reactor internal 6 rests, decreases due to compacting of the bed, internal 6 moves in downward direction with respect to side wall 2.

In Figure 2 is shown sealing means 14 attached around the outer side surface 15 of the lower support grid 7 in more detail. Sealing means 14 is in the form of ceramic rope wound around outer side surface 15. The rope is contained in a stuffing box, open-ended towards side wall 2. The box is confined by outer side surface 15, retainer ring 17 and compression ring 18.

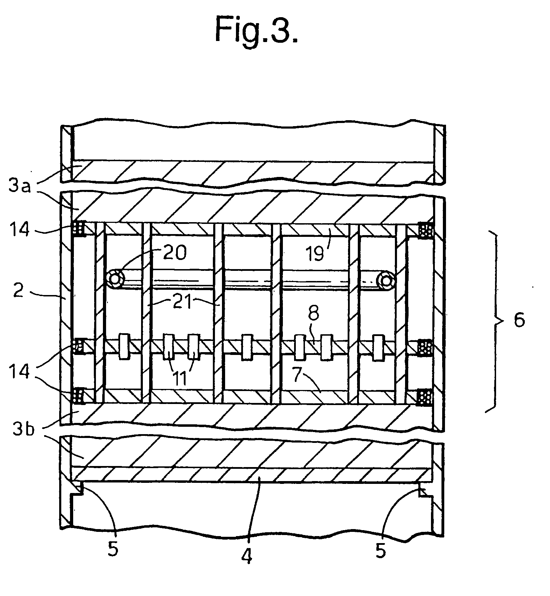

In Figure 3, part of a multiple bed downflow reactor according to the invention containing a reactor internal 6 having a lower 7 and an upper support grid 19 is shown. Two catalyst beds 3a, 3b are shown. Reactor internal 6 further comprises a distribution tray 8 and a quench ring 20. The lower 7 and upper support grid 19, and also distribution tray 8 and quench ring 20 are connected to each other by means of vertically extending legs 21. Lower catalyst bed 3b rests upon support grid 4, which rests upon ring 5. Reactor internal 6 rests upon the upper surface of catalyst bed 3b, and upper catalyst bed 3a rests upon upper support grid 19.

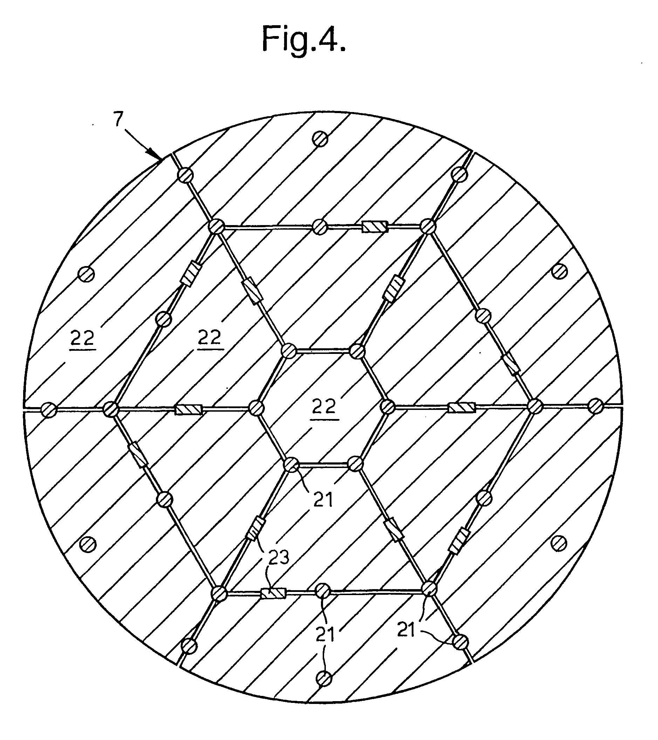

Figure 4 shows a top view of lower support grid 7 composed of thirteen panels 22. Adjacent panels are coupled to each other by means of joints 23 and/or vertically extending legs 21.

## Claims

1. A reactor comprising a normally vertically extending vessel, the vessel containing at least one reaction bed and a reactor internal comprising a substantially horizontal lower support grid and at least one distribution device selected from a distribution tray and means for distributing a quench fluid, which distribution device is located above the lower support grid and is connected to and spaced apart from the lower support grid by means of vertically extending legs, in which reactor the lower support grid rests upon the upper surface of a reaction bed.

2. A reactor according to claim 1, wherein the reactor internal further comprises a substantially horizontal upper support grid, wherein the lower and upper support grids are connected to and spaced apart from each other by means of vertically extending legs and wherein the distribution device is located between the upper and lower support grid.

3. A reactor according to claim 2, wherein the vessel contains at least two vertically spaced apart reaction beds and, between adjacent beds, the reactor internal having a lower and an upper support grid, in which reactor the reaction bed above the reactor internal rests upon the upper support grid of the reactor internal and the lower support grid rests upon the upper surface of the reaction bed below the reactor internal.

4. A reactor according to any one of claims 1 to 3, wherein each support grid of the reactor internal is composed of different smaller grid panels connected to each other.

5. A reactor according to claim 4, wherein the reactor internal comprises a distribution tray, wherein the distribution tray is composed of different smaller panels connected to each other.

6. A reactor according to any one of claims 1 to 5, wherein each support grid of the reactor internal is provided with sealing means around its perimeter providing a fluid-tight sealing between the inner surface of the wall of the vessel and the perimeter of each support grid.

7. A reactor according to any one of claims 1 to 6, wherein the distribution tray of the reactor internal is provided with sealing means around its perimeter providing a fluid-tight sealing between the inner surface of the wall of the vessel and the perimeter of the distribution tray.

8. A reactor according to claim 6 or 7, wherein each sealing means is contained in a stuffing box.

9. A reactor according to any one of claims 1 to 8, wherein the reaction bed on which the lower support grid rests comprises a densely-packed bed of catalyst particles.

10. A reactor according to any one of claims 1 to 9, wherein the bed on which the lower support grid rests comprises a layer of ceramic support particles on top of a layer of catalyst particles.

11. A reactor according to any one of claim 1 to 10, comprising means for distributing a quench fluid, wherein the means for distributing a quench fluid are flexibly connected to a quench fluid supply conduit.

12. Use of a reactor as defined in any one of claims 1 to 11 in a process for hydrocarbon processing.

## Patentansprüche

1. Reaktor mit einem sich normalerweise vertikal erstreckenden Gefäß, wobei das Gefäß zumindest ein Reaktionsbett und Reaktorinneneinbauten enthält, die im wesentlichen ein horizontales unteres Traggitter und zumindest eine Verteilvorrichtung umfassen, die aus einer Verteilschale und Mitteln zum Verteilen eines Abschreckfluids gewählt sind, wobei die Verteilvorrichtung oberhalb des unteren Traggitters vorgesehen und mittels vertikal verlaufender Beine von dem unteren Traggitter beabstandet sowie mit diesem verbunden ist, in welchem Reaktor das untere Traggitter auf der oberen Fläche eines Reaktionsbettes ruht.

2. Reaktor nach Anspruch 1, bei welchem die Reaktorinneneinbauten ferner ein im wesentlichen horizontales oberes Traggitter umfassen, wobei das untere und das obere Traggitter voneinander mittels vertikal verlaufender Beine beabstandet und verbunden sind, und wobei die Verteilvorrichtung zwischen dem oberen und dem unteren Traggitter angeordnet ist.

3. Reaktor nach Anspruch 2, bei welchem das Gefäß zumindest zwei vertikal beabstandete Reaktionsbetten aufweist, und zwischen benachbarten Betten die Reaktorinneneinbauten ein unteres und ein oberes Traggitter aufweisen, in welchem Reaktor das Reaktionsbett oberhalb der Reaktorinneneinbauten auf dem oberen Traggitter der Reaktorinneneinbauten ruht, und das untere Traggitter auf der oberen Fläche des Reaktionsbettes unterhalb der Reaktorinneneinbauten ruht.

4. Reaktor nach einem der Ansprüche 1 bis 3, bei welchem das Traggitter der Reaktorinneneinbauten aus verschiedenen kleineren Gitterpanelen gebildet ist, die miteinander verbunden sind.

5. Reaktor nach Anspruch 4, bei welchem die Reaktorinneneinbauten eine Verteilschale aufweisen, wobei die Verteilschale aus verschiedenen kleineren Panelen gebildet ist, die miteinander verbunden sind.

6. Reaktor nach einem der Ansprüche 1 bis 5, bei welchem jedes Traggitter der Reaktorinneneinbauten mit Dichtungsmitteln um seinen Umfang versehen ist, die eine fluiddichte Abdichtung zwischen der Innenfläche der Wand des Gefäßes und dem Umfang jedes Traggitters bilden.

7. Reaktor nach einem der Ansprüche 1 bis 6, bei welchem die Verteilschale der Reaktorinneneinbauten mit Dichtungsmitteln um ihren Umfang versehen ist, die eine fluiddichte Abdichtung zwischen der Innenfläche der Wand des Gefäßes und dem Umfang der Verteilschale bilden.

8. Reaktor nach Anspruch 6 oder 7, bei welchem die Dichtungsmittel in einer Stopfbüchse enthalten sind.

9. Reaktor nach einem der Ansprüche 1 bis 8, bei welchem das Reaktionsbett, auf welchem das untere Traggitter ruht, ein dicht gepacktes Bett aus Katalysatorteilchen umfaßt.

10. Reaktor nach einem der Ansprüche 1 bis 9, bei welchem das Bett, auf welchem das untere Traggitter ruht, eine Lage aus Keramikträgerteilchen über einer Lage von Katalysatorteilchen aufweist.

11. Reaktor nach einem der Ansprüche 1 bis 10, bei welchem Mittel zum Verteilen des Abschreckfluids vorgesehen sind, wobei die Mittel zum Verteilen des Abschreckfluids mit einer Abschreckfluid-Zufuhrleitung flexibel verbunden sind.

12. Verwendung eines Reaktors nach einem der Ansprüche 1 bis 11 in einem Verfahren zur Verarbeitung von Kohlenwasserstoff.

## Revendications

1. Réacteur comportant une cuve s'étendant normalement verticalement, la cuve contenant au moins un lit de réaction et un équipement interne de réacteur comportant une grille de support inférieure sensiblement horizontale et au moins un dispositif de distribution sélectionné parmi un plateau de distribution et des moyens pour distribuer un fluide de trempe, lequel dispositif de distribution est positionné au-dessus de la grille de support inférieure et est relié à la grille de support inférieure, et espacé de celle-ci, par l'intermédiaire de pattes s'étendant verticalement, réacteur dans lequel la grille de support inférieure est en appui sur la surface supérieure d'un lit de réaction.

2. Réacteur selon la revendication 1, dans lequel l'équipement interne de réacteur comporte en outre une grille de support supérieure sensiblement horizontale, dans lequel les grilles de support inférieure et supérieure sont reliées l'une à l'autre et espacées l'une de l'autre par l'intermédiaire de pattes s'étendant verticalement, et dans lequel le dispositif de distribution est positionné entre les grilles de support supérieure et inférieure.

3. Réacteur selon la revendication 2, dans lequel la cuve contient au moins deux lits de réaction espacés verticalement et, entre des lits adjacents, l'équipement interne de réacteur ayant des grilles de support inférieure et supérieure, réacteur dans lequel le lit de réaction au-dessus de l'équipement interne de réacteur est en appui sur la grille de support supérieure de l'équipement interne de réacteur, et la grille de support inférieure est en appui sur la surface supérieure du lit de réaction en dessous de l'équipement interne de réacteur.

4. Réacteur selon l'une quelconque des revendications 1 à 3, dans lequel chaque grille de support de l'équipement interne de réacteur est constituée de panneaux de grille plus petits différents reliés les uns aux autres.

5. Réacteur selon la revendication 4, dans lequel l'équipement interne de réacteur comporte un plateau de distribution, dans lequel le plateau de distribution est constitué de différents panneaux plus petits reliés les uns aux autres.

6. Réacteur selon l'une quelconque des revendications 1 à 5, dans lequel chaque grille de support de l'équipement interne de réacteur est munie de moyens d'étanchéité autour de son périmètre fournissant une étanchéité étanche aux fluides entre la surface intérieure de la paroi de la cuve et le périmètre de chaque grille de support.

7. Réacteur selon l'une quelconque des revendications 1 à 6, dans lequel le plateau de distribution de l'équipement interne de réacteur est muni de moyens d'étanchéité autour de son périmètre fournissant une étanchéité étanche aux fluides entre la surface intérieure de la paroi de la cuve et le périmètre du plateau de distribution.

8. Réacteur selon la revendication 6 ou 7, dans lequel chacun des moyens d'étanchéité est contenu dans une boîte à étoupe.

9. Réacteur selon l'une quelconque des revendications 1 à 8, dans lequel le lit de réaction sur lequel la grille de support inférieure est constitué d'un lit conditionné de manière dense de particules de catalyseur.

10. Dispositif selon l'une quelconque des revendications 1 à 9, dans lequel le lit sur lequel la grille de support inférieure est en appui comporte une couche de particules de support en céramique sur la partie supérieure d'une couche de particules de catalyseur.

11. Réacteur selon l'une quelconque des revendications 1 à 10, comportant des moyens pour distribuer un fluide de trempe, dans lequel les moyens pour distribuer un fluide de trempe sont reliés de manière fixe à un conduit d'alimentation de fluide de trempe.

12. Utilisation d'un réacteur tel que défini dans l'une quelconque des revendications 1 à 11, dans un processus pour le traitement d'hydrocarbure.
